# EUROPEAN PATENT SPECIFICATION

(11) **EP 0 652 067 B1**
(45) Date of publication and mention of the grant of the patent: **08.07.1998**
(21) Application number: 94912683.3
(22) Date of filing: 14.04.1994
(51) Int. Cl.: B23H 7/10

(54) **WIRE ELECTRIC DISCHARGE MACHINE**
SCHNEIDDRAHTFUNKEROSIONSBEARBEITUNGSVORRICHTUNG
MACHINE DE DECHARGE ELECTRIQUE POUR CABLE

(30) Priority: 21.04.1993 JP 116641/93
(43) Date of publication of application: 10.05.1995
(73) Proprietor: FANUC LTD., Minamitsuru-gun, Yamanashi 401-05 (JP)
(72) Inventor: KAJITORI, Toyotada, Fanuc Dai-3 Vira-karamatsu, Minamitsuru-gun, Yamanashi 401-05 (JP); FUJITA,Minoru, Framingham, MA 01701 (US)
(74) Representative: Billington, Lawrence Emlyn
(86) International application number: JP9400626
(87) International publication number: WO9423881

(56) References cited:
- EP-A- 0 206 041
- EP-A- 0 220 436
- JP-A- 2 224 926
- JP-A- 3 019 726
- JP-A- 4 331 022

## Description

This invention relates to a wire electric discharge machine having an automatic wire feeding function and a disconnection recovery function.

In wire electric discharge machines, a wire is guided along upper and lower wire guides arranged above and below a workpiece, respectively, and electric current is supplied to the wire to produce an electric discharge between the wire and the workpiece, thereby cutting the workpiece. This type of wire electric discharge machine has an automatic wire feeding function and a disconnection recovery function.

The automatic wire feeding operation includes cutting the wire when one machining operation is completed, removing the leading or forward part of the cut wire with respect to the direction of travel of the wire, and passing the trailing or rear part of the cut wire through a machining start hole provided for the subsequent machining operation from a distal end thereof.

According to the disconnection recovery operation, when an abnormal electric discharge occurs during machining operation and the wire is disconnected at the point of such discharge, an upstream portion of the disconnected wire damaged by the abnormal discharge is cut off, and the wire (having the thus-cut end as a leading end) is fed to the workpiece.

Thus, both the automatic wire feeding operation and the disconnection recovery operation involve forced cutting of the wire. The wire can be cut in two ways: One method is a current-supply cutting, in which the wire is tensed, and electric current is supplied to the tensed part of the wire to produce Joule heat there, thereby cutting the wire. Examples of such cutting are provided by EP-A-0 220 436 and JP-A-4-331 022. The other method is to shear the wire using a cutter. US-A-4,778,972 employs a mechanical cutter, and utilizes the application of heat also. Where the current-supply cutting is employed, the cut end of the wire is free from burr, and since the portion of the wire to which electric current is supplied is annealed due to Joule heat, the annealed portion becomes straight. That is, although the wire tends to coil up, the cut end portion of the wire can be restored to its original shape due to the annealing effect. The cutting process also causes the cut end portion of the wire to be slightly reduced in diameter, thereby making it easier to feed the wire in the subsequent stage. For these reasons, the current-supply cutting method provides better effect than the shearing method using a cutter.

In the conventional current-supply cutting method, however, it is not possible to predetermine the point at which the wire is to be cut between two electrodes through which wire-cutting current is supplied to the wire. Accordingly, even if current is passed between the two electrodes and the portion of wire between the two electrodes is subjected to annealing, the wire may be cut at a point near the upstream side electrode. In this case, most part of the annealed portion is cut off, and the remaining portion of the wire is scarcely annealed. To cope with such a problem, there is an idea suggesting to reduce the distance between the two electrodes so that the range within which the wire is cut can be limited to some extent, thereby facilitating the subsequent feeding operation. In this method, however, annealed portion of the wire is too limited. Thus, the conventional current-supply cutting method has technical difficulty in deriving stable annealing effect from the cutting method using the electric current.

An object of the present invention is to provide a wire electric discharge machine equipped with a wire cutting mechanism for cutting a wire by supplying electric current thereto, wherein the wire-cutting current is effectively used for both the wire cutting and for providing the wire with stable annealing effect.

According to a first aspect of the present invention there is provided a wire electric cutting method for a wire electric discharge machine, comprising the steps of: approaching each of first and second wire-cutting electrodes to a wire electrode; holding the wire-cutting electrodes in contact with the wire electrode respectively at a first level of a travel path of the wire electrode and at a second level separated at a predetermined distance along the travel path from the first level on a downstream side of the travel path; tensing the wire electrode so that at least a portion of the wire electrode located between the first and second levels is tensed; and supplying electric current to the wire electrode through the first and second wire-cutting electrodes; characterised by: supplying a fluid toward the portion of the wire electrode located between the first and second levels so that said portion of the wire electrode is exposed directly or indirectly to temperature of the fluid; and moving each of the first and second wire-cutting electrodes away from the wire electrode after the wire electrode is cut by the effect of the current supply from the wire-cutting electrodes.

According to a second aspect of the present invention, there is provided a wire electric discharge machine including an upper wire guide for guiding a wire at a location above a workpiece, a lower wire guide for guiding the wire at a location below the workpiece, current supply-wire cutting means including first and second wire-cutting electrodes arranged above the upper wire guide and separated from each other at a predetermined distance along a wire path, and a wire tensing means for tensing at least a portion of the wire between a location at which the wire contacts the first wire-cutting electrode and a location at which the wire contacts the second wire-cutting electrode, characterised in that: a wire feed pipe structure comprising a cooling fluid inlet section, a slender pipe-shaped annealing section, a fluid outlet section and a heating section arranged in the named order in a top-to-bottom direction and each having a center through-hole formed therein are arranged between the first and second wire-cutting electrodes in a manner such that any of the axes of those through-holes is aligned with a path of travel of the wire so that the wire fed from the first wire-cutting electrode is allowed to pass successively through the through holes of the cooling fluid inlet section, the annealing section, the fluid outlet section and the heating section of the wire feed pipe structure to be introduced into the lower wire guide via the second wire-cutting electrode; the cooling fluid inlet section of the wire feed pipe structure has a cooling fluid inlet port formed in a side wall thereof, a cooling fluid inlet passage formed therein for connecting the cooling fluid inlet port to the through hole thereof, and a blocking member arranged in the through hole at a location immediately above a junction of the through hole and the cooling fluid inlet passage for preventing fluid supplied via the cooling fluid inlet passage from flowing upward; the cooling fluid outlet section of the wire feed pipe structure has a cooling fluid discharge port formed in a side wall thereof, a cooling fluid discharge passage formed therein for connecting the cooling fluid discharge port to the through hole thereof, and a blocking member arranged in the through hole thereof at a location immediately below a junction of the through hole and the cooling fluid discharge passage for preventing the fluid flowing down via the annealing section from flowing downward to the heating section.

Preferably, the wire tensing means is composed of a wire winding unit and a wire delivery unit, wherein the wire winding unit includes a wire supply reel which is arranged at a starting end of the wire path and on which the wire is wound and drive means for rotating the wire supply reel in a direction to wind up the wire, and the wire delivery unit is arranged on a downstream side of the wire travel path with respect to the lower wire guide, including delivery means for holding the wire and delivering the same downstream.

Still preferably, a wire hauling unit is arranged on an immediately downstream side of the wire path with respect to the second wire-cutting electrode, the wire hauling unit including an arm having a grip at a distal end thereof for holding the wire and arm actuating means for moving the arm toward and away from the wire path, and the wire tensing means is composed of the wire hauling unit and a wire winding unit comprising a wire supply reel which is arranged at a starting end of the wire path and on which the wire is wound and drive means for rotating the wire supply reel in a direction to wind up the wire.

Further preferably, a pressure roller is arranged on an immediately downstream side of the wire path with respect to the second wire-cutting electrode, for pushing the wire sideways to press the wire against the second wire-cutting electrode.

Further preferably, the second wire-cutting electrode is combined with electrode shifting means, wherein the electrode actuating means is operable to advance the second wire-cutting electrode toward the wire path to cause the same to touch the wire, and to retract the second wire-cutting electrode away from the wire to keep the same off the wire.

Still preferably, the first wire-cutting electrode is always disposed in contact with the wire while the second wire-cutting electrode is fixed at a position separated from the wire, wherein the wire is pressed against the second wire-cutting electrode by a pressure roller arranged on an immediately downstream side of the wire path with respect to the second wire-cutting electrode to supply electric current to the wire.

Further preferably, the cooling fluid inlet section of the wire feed pipe structure has a nozzle formed in the through hole thereof at a location immediately downstream of the junction of the through hole and the cooling fluid inlet passage so that the cooling fluid introduced to the through hole from the cooling fluid inlet passage forms a downstream jet flow as it passes through the nozzle.

With the above arrangement of the present invention, when the wire is heated at a location between the first and second wire-cutting electrodes, an effective heating temperature difference is caused between the slender pipe-shaped annealing section and the heating section. As a result, the wire situated at the slender pipe-shaped annealing section can be annealed at a certain temperature while the wire situated in the heating space is heated at a higher temperature, whereby the wire is cut at the heating section, and not at the annealing section, without fail when required. Thus, not only the cutting point is almost fixed, but also the annealing effect can be obtained effectively when cutting the wire by current supplied thereto.

### Brief Description of the Drawings

FIG. 1 is a schematic front view of a wire electric discharge machine according to the present invention; and
FIG. 2 is a sectional view of a wire feed pipe structure used in the wire electric discharge machine of FIG. 1.

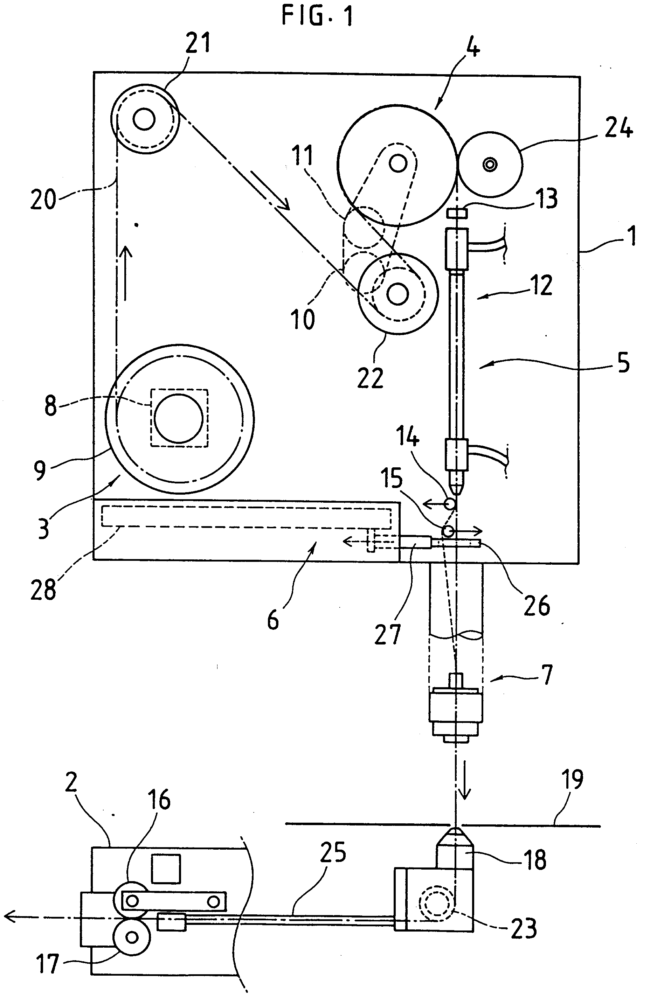

FIG. 1 schematically illustrates the entire arrangement of a wire electric discharge machine having an automatic wire feeding function and a disconnection recovery function. The wire electric discharge machine is composed of an upper frame 1 and a lower frame 2. The upper and lower frames 1 and 2 are coupled to each other by a column, not shown, to form an integral rigid body, and face each other.

The upper frame 1 comprises a wire winding unit 3, a wire feed roller 4, a wire cutting mechanism 5, a wire hauling unit 6, and an upper wire guide 7.

The wire winding unit 3 includes a supply reel 9 coupled to a winding motor 8. The winding motor 8 rotates the supply reel 9 in a direction to wind up a wire 20 which has once been unreeled from the reel 9. The supply reel 9 is in an idle state when it is not driven by the winding motor 8.

The wire feed roller 4 is driven by a wire feed motor 10. The amount of rotation of the wire feed motor 10 is detected by an encoder 11.

The wire cutting mechanism 5 includes a wire feed pipe structure 12, first and second wire-cutting electrodes 13 and 14 respectively arranged at wire inlet and outlet of the pipe structure 12, and a pressure roller 15 arranged below the second wire-cutting electrode 14, that is, on the downstream side of the wire path.

The wire hauling unit 6 includes an arm 27 having a grip 26 at a distal end thereof, and an air cylinder 28 for withdrawing the arm 27 in a direction away from the wire path. The grip 26 is positioned downstream with respect to the pressure roller 15 and is capable of holding and releasing the wire 20.

The first wire-cutting electrode 13 has a clamp-like structure and is capable of holding and releasing the wire 20.

The upper wire guide 7 has a nozzle, not shown, for guiding the wire at a location above a workpiece, supplying electric current, and spraying a machining liquid downward in parallel with the wire.

The path of travel of the wire 20 in the upper frame 1 is indicated by the alternate long and short dash line in FIG. 1. Specifically, the wire 20 unreeled from the supply reel 9 of the wire winding unit 3 is turned by deflection rollers 21 and 22, passes between the wire feed roller 4 and a pinch roller 24, comes into contact with the first wire-cutting electrode 13, passes through the wire feed pipe structure 12, reaches the upper wire guide 7 passing along the second wire-cutting electrode 14 and the pressure roller 15, and then passes through the guide 7 toward the lower frame 2.

The second wire-cutting electrode 14 and the pressure roller 15 are arranged so that they are allowed to move either towards or away from the wire path. At the time of wire cutting operation, the wire-cutting electrode 14 and the pressure roller 15 are individually moved toward the wire 20 by driving means such as a solenoid, not shown. The pressure roller 15 at this time is moved beyond the wire path, as shown in FIG. 1, to bend the wire 20 as indicated by a dashed line, whereby the wire 20 is reliably brought into contact with the second wire-cutting electrode 14. When the wire cutting comes to an end, the second wire-cutting electrode 14 and the pressure roller 15 are both moved away from the wire 20, thus releasing the contact between the wire 20 and the second wire-cutting electrode 14.

The lower frame 2 comprises a lower wire guide 18, a guide pipe 25, and the combination of a wire delivery roller 16 and a pinch roller 17. Reference numeral 19 denotes the upper surface level of a worktable. A workpiece placed on the worktable undergoes predetermined machining by means of an electric discharge produced between the workpiece and the wire 20 extending between the upper and lower wire guides 7 and 18.

The lower wire guide 18 includes a nozzle, not shown, for guiding the wire at a location below the workpiece, supplying electric current, and spraying a machining liquid upward in parallel with the wire.

The wire 20 fed from the upper wire guide 7 of the upper frame passes through the lower wire guide 18 and is turned by a deflection roller 23, as shown in FIG. 1. Then, the wire 20 is guided through the guide pipe 25, passes between the wire delivery roller 16 and the pinch roller 17, and is wound around a wire take-up roll, not shown.

During electric discharge machining, the wire 20 travels along the wire path as follows: In the upper frame 1, the wire 20 is fed along the wire path by the combination of the wire feed roller 4, rotated by the wire feed motor 10, and the pinch roller 24 disposed in contact with the feed roller 4, and, in the lower frame 2, the wire 20 is pulled along the wire path by the combination of the wire delivery roller 16 and the pinch roller 17 disposed facing the delivery roller 16. However, while the wire 20 is moving during electric discharge machining, the supply reel 9 is not driven by the winding motor 8 but is kept in an idle state.

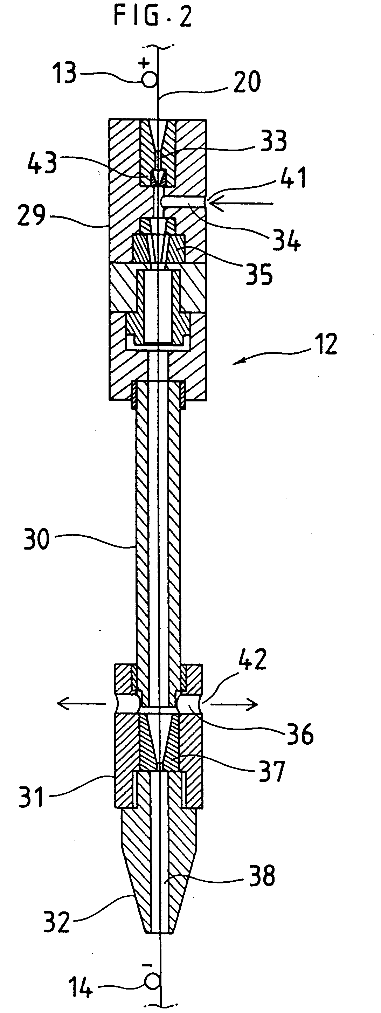

The wire feed pipe structure 12 constituting the wire cutting mechanism 5 will be described in detail with reference to FIG. 2.

The wire feed pipe structure 12 comprises a water inlet section 29, an annealing section 30, a water outlet section 31, and a heating section 32 arranged in the order mentioned along the traveling direction of the wire 20. Each of these sections has a center through hole 33 formed therein to extend axially so as to allow passage of the wire 20, and is electrically insulated from the wire 20.

The water inlet section 29 has a cooling water supply port 41 opening in the side wall thereof, and a cooling water supply passage 34 connecting the supply port 41 to the through hole 33. A restriction 43 is formed in the through hole 33 of the water inlet section 29 at a location immediately upstream of the junction where the through hole 33 and the supply passage 34 meet in order to prevent the cooling water, supplied from the supply port 41 through the passage 34, from being ejected to the upstream side, although the restriction 43 maintains the through hole large enough to allow the passage of the wire. Formed at immediately downstream of the junction of the through hole 33 and the supply passage 34 is a nozzle 35 at which the diameter of the through hole 33 is reduced to provide a jetting effect to the cooling water passing there through. The diameter of the through hole 33 again increases at the downstream side with respect to the nozzle 35. The through hole 33 at the downstream side leads to the upper end of the through hole 33 cut in the annealing section 30 which has a simple pipe-like shape. The pipe-shaped annealing section 30 has a lower end connected to the water outlet section 31.

The water outlet section 31 has a cooling water discharge port 42 opening in the side wall thereof, and a cooling water discharge passage 36 connecting the discharge port 42 to the axial through hole 33. A nozzle-like partition wall 37 is formed along the through hole 33 of the water outlet section 31 at a location immediately downstream of the junction where the through hole 33 and the discharge passage 36 meet. A small hole cut through the partition wall 37 allows the passage of the wire 20 but prevents the cooling water from flowing therethrough.

Cooling water is introduced from the supply port 41 of the water inlet section 29 to the supply passage 34, passed through hole 33 and the nozzle 35 of the water inlet section 29 and through hole 33 of the annealing section 30, and then discharged from the discharge port 42 of the water outlet section 31 through the discharge passage 36. The cooling water is fed by using a machining liquid supply device provided in the wire electric discharge machine.

The heating section 32 is coupled to the downstream end of the partition wall 37 of the water outlet section 31. The center through hole 33 of the heating section 32 has an increased diameter approximately equal to that of the counterpart of the annealing section 30, thus defining a heating space 38. The wire 20 travels towards downstream through the heating space 38, and then leaves the through hole 33 of the wire feed pipe structure 12.

The current supply to the first and second wire-cutting electrodes for the wire cutting and annealing, the supply of the cooling water by the machining liquid supply device, and the operations of related parts for tensing the wire, etc., are executed under the control of a control device, which is not shown. The control operation executed by the control device of the wire electric discharge machine according to the present embodiment is characterized, compared with the control operation executed by the control device of a conventional wire electric discharge machine, in that, when electric current is supplied for cutting the wire, a sufficient amount of cooling water is fed to the supply port 34, so that most part of the wire between the first and second wire-cutting electrodes (except for a small portion of the wire located at the heating section) can be exposed to the cooling water.

While normal electric discharge machining is carried out by the wire electric discharge machine, the second wire-cutting electrode 14 and the pressure roller 15 are respectively in a retracted position from the wire 20, and thus the cutting electrode 14 and the wire 20 remain in a non-contact state.

Normally, the wire 20 is made to travel downstream along the wire path, due to the wire feeding effect achieved by the combination of the wire feed roller 4 and the pinch roller 24 disposed in contact therewith and the wire pulling effect achieved by the combination of the wire delivery roller 16 and the wire hauling unit 6, whereby a workpiece (not shown) placed on the upper surface 19 of the worktable is machined.

During the machining operation, the workpiece, along with the worktable carrying the workpiece thereon, is controlled so that it moves on a plane (horizontal plane) perpendicular to the wire path (vertical direction) along a predetermined path with reference to the wire path. During this period, the first wire-cutting electrode 13 is kept in touch with the wire with its clamp kept open. Further, the machining liquid is jetted from each of the nozzles of the upper and lower wire guides 7 and 18, to remove sludge produced at a machining spot and also for cooling.

When a geometric figure-based machining of the workpiece is completed and a new figure-based machining is to be executed, the control device of the wire electric discharge machine provides a series of commands to carry out an automatic wire feeding operation.

In accordance with the commands, the drives of the wire feed roller 4 and the wire delivery roller 16 are stopped, whereby the wire 20 stops traveling. Even after the travel of the wire 20 is stopped, the wire delivery roller 16 and the pinch roller 17 keep holding the wire 20 therebetween.

Subsequently, the second wire-cutting electrode 14 and the pressure roller 15, which have been in their retracted positions respectively, advance toward the wire 20 to come into contact with the wire. Thus, wire-cutting electric current flows through the wire 20 between the second wire-cutting electrode 14 and the first wire-cutting electrode 13 which has been in contact with the wire 20 during the electric discharge machining. After touching the wire 20, the pressure roller 15 further advances to bend the wire 20 as indicated by the dashed line in FIG. 1, whereby the wire 20 is securely pressed against the second wire-cutting electrode 14 to stabilize the current supply.

Accordingly, the portion of the wire 20 between the first and second wire-cutting electrodes 13 and 14 is heated as it is supplied with electric current. Simultaneously, the winding motor 8 of the upper frame 1 is driven to rotate the supply reel 9, thereby causing the wire 20 to be pulled back in a direction opposite to the normal travel direction (indicated by arrows in FIG. 1), i.e., in the upstream direction. However, since the wire delivery roller 16 and the pinch roller 17 of the lower frame 2 hold the wire 20 tight therebetween, as mentioned above, the portion of the wire 20 defined by the supply reel 9 and the wire delivery roller 16 is tensed when the supply reel 9 is rotated by the winding motor 8 to pull the wire 20 in the opposite direction.

Thus, with the portion of the wire 20 between the first and second wire-cutting electrodes 13 and 14 tensed in this manner, electric current is supplied from the wire-cutting electrodes 13 and 14 to this portion of the wire 20. As a result, the wire 20 is cut at a location between these electrodes 13 and 14. However, part of the wire 20 between the electrodes 13 and 14 is exposed to the cooling water. More specifically, always cooled by cooling water is a portion of the wire 20, located within the through hole 33, which extends from the immediatly downstream side of the restriction 43 of the water inlet section 29, via nozzle 35 and annealing section, to the immediately upstream side of the partition wall 37, so that the wire 20 is prevented from being cut in this portion.

That is, the point at which the wire 20 is cut is limited within a region which is supplied with the wire-cutting current but is not cooled by the cooling water, that is, a point within the heating section 32 (heating space 38) located below the partition wall 37. In the annealing section 30 located above the partition wall 37, the wire 20 is heated by the electric current to such a degree as to be annealed, though it is exposed to the cooling water. In this manner, cutting and annealing can be performed simultaneously at different parts of the wire 20. The annealing in the annealing section 30 serves to straighten the curve of the wire 20, which has been acquired while it has been wound round the supply reel.

Immediately after the wire 20 is cut within a limited portion thereof situated in the heating section 32, the first wire-cutting electrode 13 clamps the upstream portion of the cut wire 20 so that the rewinding of the wire 20 due to a reaction force caused by the cutting can be prevented. Also, the wire delivery roller 16 operates to deliver the downstream portion of the cut wire 20 downstream, to discharge the wire 20 to the outside of the machine. Further, the second wire-cutting electrode 14 and the pressure roller 15 are retracted from the wire 20. The winding motor 8 is set in an idle state.

Subsequently, high-pressure cooling water is supplied via the cooling water supply port 41 into the through hole 33 of the water inlet section 29. The wire feed roller 4 is then driven, and the first wire-cutting electrode 13 releases the wire. As a result, the upstream portion of the cut wire 20 is fed downstream due to the rotation of the feed roller 4 and a jet of the high-pressure cooling water formed by the nozzle 35, whereby the distal end (cut end) of the wire 20 passes through the heating space 38 of the heating section and then through the upper wire guide 7 toward the lower wire guide 18.

In this case, the distal end portion of the wire 20 approaching the lower wire guide 18 has already been annealed at the annealing section 30 and thus is straightened by getting rid of its curve. Thus, the wire 20 can smoothly pass through the upper wire guide 7.

The length of the annealed and thus straightened portion of the wire is dependent substantially on the axial length of the pipe-shaped annealing section 30. Therefore, when the wire 20 is cut, to what extent the downstream portion of the cut wire 20 from the cutting point is to be annealed depends upon the length of the annealing section 30 of the wire feed pipe structure 12.

After passing through the upper wire guide 7, the distal end of the wire is further fed toward the lower wire guide 18 with the aid of a feeding jet (machining liquid) supplied from the nozzle (not shown) of the upper wire guide 7, and then reaches the wire delivery roller 16 via the deflection roller 23.

The wire 20 turned by the deflection roller 23 passes through the guide pipe 25 and reaches the wire delivery roller 16. The guide pipe 25 is supplied with a guiding jet of machining liquid, though detailed arrangement therefor is not illustrated, whereby the wire 20 passing through the pipe 25 is guided downstream, i.e., toward the wire delivery roller 16.

The following is a description of a disconnection recovery operation to be executed when the wire 20 is disconnected at a point where electric discharge occurs concentratedly during electric discharge machining operation.

When a disconnection of the wire 20 is detected by a disconnection detecting section, not shown, the grip 26 of the wire hauling unit 6 holds the wire 20. Then, the downstream portion of the disconnected wire 20 with respect to the point of disconnection (between the upper and lower wire guides 7 and 18 in FIG. 1) is discharged downstream by the rotation of the wire delivery roller 16.

The upstream portion of the disconnected wire 20 is annealed within the annealing section 30 by the electric current supplied from the first and second wire-cutting electrodes and by the cooling water supplied from the cooling water supply port 41, while it is cut in the heating space 38 of the heating section 32, as in the case of the automatic wire feeding described above.

In the disconnection recovery operation, the winding motor 8 is controlled in a manner such that it rotates the supply reel 9 in a direction to wind the wire 20 backward (upstream). Since, however, the wire 20 is held by the grip 26 of the wire hauling unit 6, as mentioned above, the actuation of the winding motor 8 serves to tense the upstream portion of the wire 20 with respect to the grip 26.

After the thus-tensed wire 20 is cut within a limited portion thereof situated in the heating space 38 of the heating section 32, an upstream portion of the cut wire 20 with respect to the cut point is clamped by the first wire-cutting electrode 13. On the other hand, a short piece of the wire 20, with its leading end disconnected and trailing end cut in the above manner, which is held by the grip 26 of the wire hauling unit 6 at its intermediate portion, is moved away from the wire path as the arm 27 having the grip 26 at its distal end moves away from the wire path due to the operation of the cylinder 28. The piece of the wire 20 is put into a waste wire box (not shown) provided outside the machine.

After discarding the piece of the wire 20 into the waste wire box, the arm 27 advances again toward the wire path and causes the grip 26 to be opened and positioned immediately below the wire feed pipe structure 12.

Then, the wire 20 of which the leading end has been cut is fed downstream, in the same manner as in the case of the previously described automatic wire feeding operation.

In the above embodiment, the cooling water is supplied to the annealing section 30 via the cooling water supply port 41. The cooling water is not limited to fresh water, but may be other liquid such as the machining liquid to be sprayed toward the workpiece from the nozzles of the upper and lower wire guides during electric discharge machining, or a gas (air etc.). In brief, within the region between the first and second wire-cutting electrodes 13 and 14, an effective difference of heating temperature is provided between the slender pipe-shaped annealing section 30 and the heating space of the heating section 32, so that the wire 20 situated at the slender pipe-shaped annealing section 20 can be annealed at a certain temperature while the wire 20 situated in the heating section 32 is heated at a higher temperature so as to be cut only within this section 32.

In the case where air, not cooling water, is supplied to the annealing section 30 as cooling fluid, the force produced by an air jet passing through the nozzle 35 to feed the wire 20 downstream is smaller than that produced by water. Nevertheless, the distal end of the wire can be introduced without any difficulty through the upper wire guide 7 toward the lower wire guide 18, because the wire feed roller 4 acts to feed the wire downstream in cooperation with the pinch roller 24, and the portion of wire 20 including the distal end (cut end) has been annealed and thus straightened.

Further, in the above embodiment, to supply the wire-cutting current to the wire 20, the first wire-cutting electrode is always kept in contact with the wire, while the second wire-cutting electrode 14 has to be moved forward to touch the wire. Alternatively, however, with the first wire-cutting electrode remaining to be kept always in contact with the wire as mentioned above, the second wire-cutting electrode 14 may be kept stationary at a predetermined position separated from the wire so that the wire may be pushed until it comes into contact with the second wire-cutting electrode 14 by the pressure roller 15 which is arranged on an immediately downstream side of the wire path with respect to the second wire-cutting electrode, thereby supplying electric current to the wire 20.

## Claims

1. A wire electrode cutting method for a wire electric discharge machine, comprising the steps of:
approaching each of first and second wire-cutting electrodes (13, 14) to a wire electrode (20);
holding the wire-cutting electrodes (13, 14) in contact with the wire electrode (20) respectively at a first level of a travel path of the wire electrode (20) and at a second level separated at a predetermined distance along the travel path from the first level on a downstream side of the travel path;
tensing the wire electrode (20) so that at least a portion of the wire electrode (20) located between the first and second levels is tensed; and
supplying electric current to the wire electrode (20) through the first and second wire-cutting electrodes (13, 14);
characterised by:
supplying a fluid toward the portion of the wire electrode (20) located between the first and second levels so that said portion of the wire electrode (20) is exposed directly or indirectly to temperature of the fluid; and
moving each of the first and second wire-cutting electrodes (13, 14) away from the wire electrode (20) after the wire electrode (20) is cut by the effect of the current supply from the wire-cutting electrodes (13, 14).

2. A wire electric discharge machine including an upper wire guide (7) for guiding a wire (20) at a location above a workpiece, a lower wire guide (18) for guiding the wire (20) at a location below the workpiece, current supply-wire cutting means including first and second wire-cutting electrodes (13, 14) arranged above the upper wire guide (7) and separated from each other at a predetermined distance along a wire path, and a wire tensing means for tensing at least a portion of the wire (20) between a location at which the wire (20) contacts the first wire-cutting electrode (13) and a location at which the wire contacts the second wire-cutting electrode (14), characterised in that:
a wire feed pipe structure (12) comprising a cooling fluid inlet section (29), a slender pipe-shaped annealing section (30), a fluid outlet section (31) and a heating section (32) arranged in the named order in a top-to-bottom direction and each having a center through-hole formed therein are arranged between the first and second wire-cutting electrodes (13, 14) in a manner such that any of the axes of those through-holes is in accord with the wire travel path, so that the wire (20) fed from the first wire-cutting electrode (13) is allowed to pass successively through the through holes of the cooling fluid inlet section (29), the annealing section (30), the fluid outlet section (31) and the heating section (32) of the wire feed pipe structure (12), to be introduced into the lower wire guide (18) via the second wire-cutting electrode (14);
the cooling fluid inlet section (29) of the wire feed pipe structure (12) has a cooling fluid inlet port (41) formed in a side wall thereof, a cooling fluid inlet passage (34) formed therein for connecting the cooling fluid inlet port (41) to the through hole thereof, and a blocking member (43) arranged in the through hole at a location immediately above a junction of the through hole and the cooling fluid inlet passage (34) for preventing fluid supplied via the cooling fluid inlet passage (34) from flowing upward; and
the cooling fluid outlet section (31) of the wire feed pipe structure (12) has a cooling fluid discharge port (42) formed in a side wall thereof, a cooling fluid discharge passage (36) formed therein for connecting the cooling fluid discharge port (42) to the through hole thereof, and a blocking member (37) arranged in the through hole thereof at a location immediately below a junction of the through hole and the cooling fluid discharge passage (36) for preventing the fluid flowing down via the annealing section (30) from flowing downward to the heating section (32).

3. A wire electric discharge machine according to claim 2, wherein said wire tensing means is composed of a wire winding unit (3) and wire delivery unit (2); said wire winding unit (3) includes a wire supply reel (9) which is arranged at a starting end of the wire path and on which the wire (20) is wound and drive means (8) for rotating the wire supply reel (9) in a direction to wind up the wire (20); and said wire delivery unit (2) is arranged on a downstream side of the wire travel path with respect to the lower wire guide (18), including delivery means (16) for holding the wire (20) and delivering the same downstream.

4. A wire electric discharge machine according to claim 2, further comprising a wire hauling unit (6) arranged on an immediately downstream side of the wire path with respect to the second wire-cutting electrode (14), said wire hauling unit (6) including an arm (27) having a grip (26) at a distal end thereof for holding the wire (20), and arm actuating means (28) for moving the arm (27) toward and away from the wire path, said wire tensing means being composed of said wire hauling unit (6) and a wire winding unit (3) comprising a wire supply reel (9) which is arranged at a starting end of the wire path and on which the wire (20) is wound, and drive means (8) for rotating the wire supply reel (9) in a direction to wind up the wire (20).

5. A wire electric discharge machine according to any one of claims 2 to 4, further comprising a pressure roller (15) arranged on an immediately downstream side of the wire path with respect to the second wire- cutting electrode (14), for pushing the wire (20) sideways to press the wire against the second wire-cutting electrode (14).

6. A wire electric discharge machine according to any one of claims 2 to 5, wherein said second wire-cutting electrode (14) is combined with electrode shifting means, said electrode shifting means being operable to advance the second wire-cutting electrode (14) toward the wire path to cause the same to touch the wire (20), and to retract the second wire-cutting electrode (14) away from the wire (20) to keep the same off the wire (20).

7. A wire electric discharge machine according to any one of claims 2 to 4, wherein said first wire-cutting electrode (13) is located always to be disposed in contact with the wire (20), while said second wire-cutting electrode (14) is fixed at a position in which it will be separated from the wire (20), the wire (20) being able to be pressed against the second wire-cutting electrode (14) by a pressure roller (15) arranged on an immediately downstream side of the wire path with respect to the second wire-cutting electrode (14), to thereby supply electric current to the wire (20).

8. A wire electric discharge machine according to any one of claims 2 to 7, wherein said cooling fluid inlet section (29) of the wire feed pipe structure (12) has a nozzle (35) formed in the through hole thereof at a location immediately downstream of the junction of the through hole and a cooling fluid inlet passage (34), so that the cooling fluid introduced to the through hole from the cooling fluid inlet passage (34) forms a downstream jet flow as it passes through the nozzle (35).

## Patentansprüche

1. Drahtelektrodenabschneideverfahren für eine elektrische Entladungsdrahtschneidemaschine, das Schritte umfaßt zum
Annähern jeder von ersten und zweiten Drahtabschneideelektroden (13, 14) an eine Drahtelektrode (20),
Halten der Drahtabschneideelektroden (13, 14) in Kontakt mit der Drahtelektrode (20) jeweils in einer ersten Höhenposition eines Bewegungswegs der Drahtelektrode (20) und in einer zweiten Höhenposition, die sich um eine vorbestimmte Distanz längs des Bewegungswegs von der ersten Höhenposition getrennt auf einer stromabwärtigen Seite des Bewegungswegs befindet,
Spannen der Drahtelektrode (20) derart, daß zumindest ein Teil der Drahtelektrode (20), der sich zwischen den ersten und zweiten Höhenpositionen befindet, gespannt wird, und
Zuführen eines elektrischen Stroms zu der Drahtelektrode (20) durch die ersten und zweiten Drahtabschneideelektroden (13, 14),
**gekennzeichnet** durch
ein Zuführen einer Flüssigkeit hin zu demjenigen Teil der Drahtelektrode (20), der sich zwischen den ersten und zweiten Höhenpositionen befindet, so daß dieser Teil der Drahtelektrode (20) direkt oder indirekt der Temperatur der Flüssigkeit ausgesetzt wird, und
ein Bewegen jeder der ersten und zweiten Drahtabschneideelektroden (13, 14) fort von der Drahtelektrode (20), nachdem die Drahtelektrode durch die Wirkung der Stromzuführung von den Drahtabschneideelektroden (13, 14) abgeschnitten ist.

2. Elektrische Entladungsdrahtschneidemaschine, die enthält: eine obere Drahtführung (7) zum Führen einer Drahtelektrode (20) an einem Ort oberhalb eines Werkstücks, eine untere Drahtführung (18) zum Führen der Drahtelektrode (20) an einem Ort unterhalb des Werkstücks, Drahtabschneidestromzuführungsmittel, die erste und zweite Drahtabschneideelektroden (13, 14) enthalten, welche oberhalb der oberen Drahtführung (7) angeordnet und um eine vorbestimmte Distanz längs eines Drahtwegs voneinander getrennt sind, und ein Drahtspannmittel zum Spannen zumindest eines Teils der Drahtelektrode (20) zwischen einem Ort, an dem die Drahtelektrode (20) die erste Drahtabschneideelektrode (13) berührt, und einem Ort, an dem die Drahtelektrode die zweite Drahtabschneideelektrode (14) berührt,
**gekennzeichnet** durch
einen Drahtzuführungsrohraufbau (12), der umfaßt: einen Kühlflüssigkeitseinlaßabschnitt (29), einen dünnen rohrförmigen Abkühlungsabschnitt (30), einen Flüssigkeitsauslaßabschnitt (31) und einen Erhitzungsabschnitt (32), wobei diese Abschnitte, die in Richtung von oben nach unten in der genannten Reihenfolge angeordnet sind und wovon jeder ein mittiges Durchgangsloch hat, das darin ausgebildet ist, zwischen den ersten und zweiten Drahtabschneideelektroden (13, 14) in einer Weise angeordnet sind, daß jede der Achsen dieser Durchgangslöcher mit dem Drahtbewegungsweg übereinstimmt, so daß der Drahtelektrode (20), welche von der ersten Drahtabschneideelektrode (13) zugeführt wird, gestattet ist, nacheinander die Durchgangslöcher des Kühlflüssigkeitseinlaßabschnitts (29), des Abkühlungsabschnitts (30), des Flüssigkeitsauslaßabschnitts (31) und des Erhitzungsabschnitts (32) des Drahtzuführungsrohraufbaus (12) zu durchlaufen, um über die zweite Drahtabschneideelektrode (14) in die untere Drahtführung (18) eingeführt zu werden, wobei
der Kühlflüssigkeitseinlaßbschnitt (29) des Drahtzuführungsrohraufbaus (12) enthält: eine Kühlflüssigkeitseinlaßöffnung (41), die in einer Seitenwandung desselben ausgebildet ist, einen Kühlflüssigkeitseinlaßkanal (34), der darin zum Verbinden der Kühlflüssigkeitseinlaßöffnung (41) mit dem Durchgangsloch desselben ausgebildet ist, und ein Absperrteil (43), das in dem Durchgangsloch an einer Stelle unmittelbar oberhalb einer Verbindung des Durchgangslochs und des Kühlflüssigkeitseinlaßkanals (34) angeordnet ist, um zu verhindern, daß Flüssigkeit, die über den Kühlflüssigkeitseinlaßkanal (34) zugeführt wird, aufwärts fließt, und
der Kühlflüssigkeitsauslaßabschnitt (31) des Drahtzuführungsrohraufbau (12) enthält: eine Kühlflüssigkeitsauslaßöffnung (42), die in einer Seitenwandung desselben ausgebildet ist, einen Kühlflüssigkeitsauslaßkanal (36), der darin zum Verbinden der Kühlflüssigkeitsauslaßöffnung (42) mit dem Durchgangsloch desselben ausgebildet ist, und ein Absperrteil (37), das in dem Durchgangsloch desselben an einer Stelle unmittelbar unterhalb einer Verbindung des Durchgangslochs und des Kühlflüssigkeitsauslaßkanals (36) angeordnet ist, um zu verhindern, daß die Flüssigkeit, welche abwärts durch den Abkühlungsabschnitt (30) fließt, nach unten zu dem Erhitzungsabschnitt (32) fließt.

3. Elektrische Entladungsdrahtschneidemaschine nach Anspruch 2, bei der das Drahtspannmittel aus einer Drahtwickeleinheit (3) und einer Drahtzuführungseinheit (2) zusammengesetzt ist, wobei die Drahtwickeleinheit (3) enthält: eine Drahtzuführungsrolle (9), die an einem Anfangsort des Drahtwegs angeordnet ist und auf welche die Drahtelektrode (20) gewickelt wird, und ein Antriebsmittel (8) zum Drehen der Drahtzuführungsrolle (9) in einer Richtung zum Aufwickeln der Drahtelektrode (20), und die Drahtzuführungseinheit (2) auf einer stromabwärtigen Seite des Drahtbewegungswegs in bezug auf die untere Drahtführung (18) angeordnet ist, welche ein Zuführungsmittel (16) zum Halten der Drahtelektrode (20) und Zuführen derselben in stromabwärtiger Richtung enthält.

4. Elektrische Entladungsdrahtschneidemaschine nach Anspruch 2, die ferner eine Drahttransporteinheit (6) umfaßt, welche auf einer unmittelbar stromabwärts liegenden Seite des Drahtwegs in bezug auf die zweite Drahtabschneideelektrode (14) angeordnet ist, welche Drahttransporteinheit (6) enthält: einen Arm (27), der einen Greifer (26) an einem körperfernen Ende desselben zum Halten der Drahtelektrode (20) hat, und ein Armbetätigungsmittel (28) zum Bewegen des Arms (27) hin zu und fort von dem Drahtweg, wobei das Drahtspannmittel zusammengesetzt ist aus der Drahttransporteinheit (6) und einer Drahtwickeleinheit (3), die eine Drahtzuführungsrolle (9), welche an einem Anfangsort des Drahtwegs angeordnet ist und auf welche die Drahtelektrode (20) gewickelt wird, und ein Antriebsmittel (8) zum Drehen der Drahtzuführungsrolle (9) in einer Richtung zum Aufwickeln der Drahtelektrode (20) umfaßt.

5. Elektrische Entladungsdrahtschneidemaschine nach einem der Ansprüche 2 bis 4, die ferner eine Andruckrolle (15) umfaßt, welche auf einer unmittelbar stromabwärts liegenden Seite des Drahtwegs in bezug auf die zweite Drahtabschneideelektrode (14) zum seitlichen Verschieben der Drahtelektrode (20) angeordnet ist, um den Draht gegen die zweite Drahtabschneideelektrode (14) zu drücken.

6. Elektrische Entladungsdrahtschneidemaschine nach einem der Ansprüche 2 bis 5, bei der die zweite Drahtabschneideelektrode (14) mit einem Elektrodenverschiebemittel kombiniert ist, wobei das Elektrodenverschiebemittel betätigbar ist, um die zweite Drahtabschneideelektrode (14) in Richtung auf den Drahtweg vorzubewegen, um dieselbe zu veranlassen, die Drahtelektrode (20) zu berühren, und um die zweite Drahtabschneideelektrode (14) von der Drahtelektrode (20) zurückzuziehen, um sie von der Drahtelektrode (20) fernzuhalten.

7. Elektrische Entladungsdrahtschneidemaschine nach einem der Ansprüche 2 bis 4, bei der die erste Drahtabschneideelektrode (13) stets derart angeordnet ist, daß sie sich in Kontakt mit der Drahtelektrode (20) befindet, während die zweite Drahtabschneideelektrode (14) in einer Position eingebaut ist, in der sie von der Drahtelektrode (20) getrennt ist, wobei die Drahtelektrode (20) mittels einer Andruckrolle (15), welche auf einer unmittelbar stromabwärts liegenden Seite des Drahtwegs in bezug auf die zweite Drahtabschneideelektrode (14) angeordnet ist, gegen die zweite Drahtabschneideelektrode (14) gedrückt werden kann, um dadurch der Drahtelektrode (20) elektrischen Strom zuzuführen.

8. Elektrische Entladungsdrahtschneidemaschine nach einem der Ansprüche 2 bis 7, bei der der Kühlflüssigkeitseinlaßabschnitt (29) des Drahtzuführungsrohraufbaus (12) eine Düse (35) hat, die in dem Durchgangsloch desselben an einem Ort unmittelbar stromabwärts von der Verbindung des Durchgangslochs und des Kühlflüssigkeitseinlaßkanals (34) ausgebildet ist, so daß die Kühlflüssigkeit, welche von dem Kühlflüssigkeitseinlaßkanal (34) in das Durchgangsloch eingeleitet wird, einen stromabwärtsgerichteten Ausflußstrahl bildet, wenn sie die Düse (35) durchströmt.

## Revendications

1. Procédé de découpe à l'aide d'une électrode en forme de fil pour une machine d'étincelage par fil, comprenant les étapes consistant à:
rapprocher chacune des première et seconde électrodes de coupure de fil (13, 14) à une électrode en forme de fil (20);
maintenir les électrodes de coupure de fil (13, 14) en contact avec l'électrode en forme de fil (20) respectivement à un premier niveau d'une voie de défilement de l'électrode en forme de fil (20) et à un second niveau séparé du premier niveau sur une distance prédéterminée le long de la voie de défilement, côté aval de la voie de défilement;
tendre l'électrode en forme de fil (20) de telle sorte qu'au moins une portion de l'électrode en forme de fil (20) située entre les premier et second niveaux est tendue; et
alimenter en courant électrique l'électrode en forme de fil (20) via les première et seconde électrodes de coupure de fil (13,14);
caractérisé par:
le fait d'acheminer un fluide en direction de la portion de l'électrode en forme de fil (20) située entre les premier et second niveaux de telle sorte que ladite portion de l'électrode en forme de fil (20) est exposée directement ou indirectement à la température du fluide; et
déplacer chacune des première et seconde électrodes de coupure de fil (13, 14) à l'écart de l'électrode en forme de fil (20) après que l'électrode en forme de fil (20) a été coupée sous l'effet de l'alimentation en courant provenant des électrodes de coupure de fil (13, 14).

2. Machine d'étincelage par fil englobant un guide-fil supérieur (7) pour guider un fil (20) à un endroit au-dessus d'une pièce à usiner, un guide-fil inférieur (18) pour guider le fil (20) à un endroit en dessous de la pièce à usiner, un moyen de coupure de fil par alimentation de courant englobant des première et seconde électrodes de coupure de fil (13, 14) arrangées au-dessus du guide-fil supérieur (7) et séparées l'une de l'autre sur une distance prédéterminée le long de la voie suivie par le fil, et un moyen de tension de fil pour tendre au moins une portion du fil (20) entre un endroit auquel le fil (20) vient se mettre en contact avec la première électrode de coupure de fil (13) et un endroit auquel le fil vient se mettre en contact avec la seconde électrode de coupure de fil (14), caractérisée en ce que:
une structure de conduit d'alimentation de fil (12) comprenant une section d'entrée de fluide de refroidissement (29), une section de recuit (30) en forme de tuyau mince, une section de sortie de fluide (31) et une section de chauffage (32) arrangées dans l'ordre indiqué, de haut en bas, chacune possédant un trou traversant central, arrangée entre les première et seconde électrodes de coupure de fil (13, 14) d'une manière telle que l'un quelconque des axes de ces trous traversants coïncide avec la voie de défilement de fil, si bien que le fil (20) alimenté par la première électrode de coupure de fil (13) est à même de passer successivement à travers lesdits trous traversants de la section d'entrée de fluide de refroidissement (29), de la section de recuit (30), de la section de sortie de fluide (31) et de la section de chauffage (32) de la structure de conduit d'alimentation de fil (12) pour être introduit dans le guide-fil inférieur (18) via la seconde électrode de coupure de fil (14);
la section d'entrée de fluide de refroidissement (29) de la structure de conduit d'alimentation de fil (12) possède un orifice d'entrée de fluide de refroidissement (41) pratiqué dans sa paroi latérale, un passage d'entrée de fluide de refroidissement (34) formé dans cette dernière pour relier l'orifice d'entrée de fluide de refroidissement (41) au trou traversant de ladite section, et un élément de blocage (43) arrangé dans le trou traversant à un endroit situé directement au-dessus de la jonction du trou traversant et du passage d'entrée de fluide de refroidissement (34) pour empêcher du fluide alimenté via le passage d'entrée de fluide de refroidissement (34) de s'écouler vers le haut; et
la section de sortie de fluide de refroidissement (31) de la structure de conduit d'alimentation de fil (12) possède un orifice d'évacuation de fluide de refroidissement (42) pratiqué dans sa paroi latérale, un passage d'évacuation de fluide de refroidissement (36) formé dans cette dernière pour relier l'orifice d'évacuation de fluide de refroidissement (42) au trou traversant de ladite section, et un élément de blocage (37) arrangé dans son trou traversant à un endroit situé directement en dessous de la jonction du trou traversant et du passage d'évacuation de fluide de refroidissement (36) pour empêcher le fluide s'écoulant vers le bas via la section de recuit (30) de s'écouler vers le bas jusqu'à la section de chauffage (32).

3. Machine d'étincelage par fil selon la revendication 2, dans laquelle ledit moyen de tension de fil est composé d'une unité d'enroulement de fil (3) et d'une unité de distribution de fil (2), ladite unité d'enroulement de fil (3) englobant une bobine d'alimentation de fil (9) qui est arrangée à une extrémité de départ de la trajectoire de fil et sur laquelle le fil (20) est enroulé, et un moyen d'entraînement (8) pour faire tourner la bobine d'alimentation de fil (9) dans une direction d'enroulement du fil (20), ladite unité de distribution de fil (2) étant arrangée du côté aval de la voie de défilement de fil par rapport au guide inférieur de fil (18), englobant un moyen de distribution (16) pour maintenir le fil (20) et pour distribuer ce dernier vers le bas.

4. Machine d'étincelage par fil selon la revendication 2, comprenant en outre une unité de traction de fil (6) arrangée sur un côté de la trajectoire du fil immédiatement en aval par rapport à la seconde électrode de coupure de fil (14), ladite unité de traction de fil (6) englobant un bras (27) possédant une poignée (26) à son extrémité distale pour maintenir le fil (20) et un moyen d'actionnement de bras (28) pour déplacer le bras (27) en direction et à l'écart de la trajectoire du fil, ledit moyen de tension de fil étant composé de ladite unité de traction de fil (6) et d'une unité d'enroulement de fil (3) comprenant une bobine d'alimentation de fil (9) qui est arrangée à l'extrémité de départ de la trajectoire de fil et sur laquelle est enroulé le fil (20), et un moyen d'entraînement (8) pour faire tourner la bobine d'alimentation de fil (9) dans une direction d'enroulement du fil (20).

5. Machine d'étincelage par fil selon l'une quelconque des revendications 2 à 4, comprenant en outre un rouleau de pression (15) arrangé sur un côté de la trajectoire de fil immédiatement en aval par rapport à la seconde électrode de coupure de fil (14) pour pousser le fil (20) en direction latérale dans le but de presser le fil contre la seconde électrode de coupure de fil (14).

6. Machine d'étincelage par fil selon l'une quelconque des revendications 2 à 5, dans laquelle ladite seconde électrode de coupure de fil (14) est combinée avec un moyen de décalage d'électrode, ledit moyen de décalage d'électrode étant mis en service pour faire avancer la seconde électrode de coupure de fil (14) en direction de la trajectoire de fil pour qu'elle touche le fil (20), et pour rétracter la seconde électrode de coupure de fil (14) à l'écart du fil (20) pour maintenir cette dernière à l'écart du fil (20).

7. Machine d'étincelage par fil selon l'une quelconque des revendications 2 à 4, dans laquelle ladite première électrode de coupure de fil (13) est toujours située de façon à être disposée en contact avec le fil (20), tandis que ladite seconde électrode de coupure de fil (14) est fixée dans une position dans laquelle elle sera séparée du fil (20), le fil (20) étant à même d'être pressé contre la seconde électrode de coupure de fil (14) par un rouleau de pression (15) arrangé sur un côté de la trajectoire de fil immédiatement en aval par rapport à la seconde électrode de coupure de fil (14) pour ainsi alimenter le fil (20) en courant électrique.

8. Machine d'étincelage par fil selon l'une quelconque des revendications 2 à 7, dans laquelle ladite section d'entrée de fluide de refroidissement (29) de la structure de conduit d'alimentation de fil (12) possède une tuyère (35) formée dans le trou traversant de ladite section à un endroit situé directement en aval de la jonction du trou traversant et d'un passage d'entrée de fluide de refroidissement (34), si bien que le fluide de refroidissement introduit dans le trou traversant depuis le passage d'entrée de fluide de refroidissement (34) forme un écoulement en forme de jet dirigé vers le bas lorsqu'il passe à travers la tuyère (35).
